# EUROPÄISCHE PATENTSCHRIFT

(11) **EP 2 570 327 B1**
(45) Veröffentlichungstag und Bekanntmachung des Hinweises auf die Patenterteilung: **16.04.2014**
(21) Anmeldenummer: 12176661.2
(22) Anmeldetag: 17.07.2012
(51) Int. Cl.: B62D 5/00, B62D 6/00, B62D 15/02

(54) **Verfahren zur Modifikation eines Überlagerungslenkwinkels im Lenksystem eines Fahrzeugs**
Method for modifying an overlap steering angle in a vehicle's steering system
Procédé de modification de l'angle de guidage superposé dans le système de guidage d'un véhicule

(30) Priorität: 13.09.2011 DE 102011082567
(43) Veröffentlichungstag der Anmeldung: 20.03.2013
(73) Patentinhaber: ROBERT BOSCH GMBH, 70442 Stuttgart (DE)
(72) Erfinder: Haeussler, Thomas, 74653 Kuenzelsau-Vogelsberg (DE)

(56) Entgegenhaltungen:
- WO-A1-02/02389
- DE-C1- 4 332 836

## Beschreibung

Die Erfindung bezieht sich auf ein Verfahren zur Modifikation eines Überlagerungslenkwinkels im Lenksystem eines Fahrzeugs.

### Stand der Technik

In der DE 10 2005 003 177 A1 wird ein Verfahren zur Verhinderung von Unfällen beschrieben, die durch das Abkommen des Fahrzeugs von der Fahrbahn entstehen. Über eine fahrzeugeigene Sensorik oder ein Navigationssystem wird ermittelt, ob das Fahrzeug die Fahrspur verlässt. Ist dies der Fall, wird ein maximaler Lenkwinkel vorgegeben, den der Fahrer einschlagen kann, um wieder auf die Fahrspur zurückzugelangen. Zugleich wird ein Gegenlenkmoment überlagert, das mit zunehmendem, vom Fahrer vorgegebenem Lenkeinschlag bis zum Erreichen des maximal möglichen Lenkwinkels anwächst. Auf diese Weise soll einer Überreaktion des Fahrers vorgebeugt werden, bei der der Fahrer das Lenkrad versehentlich mit zu großem Lenkeinschlag zurückbewegt, um die Fahrspur wieder zu erreichen.

WO 02/02389 A1 beschreibt ebenfalls ein gattungsgemässen Verfahren zur Modifikation eines Überlagerungslenkwinkels im Lenksystem eines Fahrzeugs, wobei der Überlagerungslenkwinkel in einem Überlagerungslenkgetriebe dem vom Fahrer erzeugten Fahrer-Lenkwinkel überlagerbar ist.

### Offenbarung der Erfindung

Der Erfindung liegt die Aufgabe zugrunde, die Unfallgefahr bzw. -schwere beim Abkommen eines Fahrzeugs von der Fahrspur zu verringern.

Diese Aufgabe wird erfindungsgemäß mit den Merkmalen des Anspruches 1 gelöst. Die Unteransprüche geben zweckmäßige Weiterbildungen an.

Das erfindungsgemäße Verfahren kann in Fahrzeugen mit einem Lenksystem eingesetzt werden, das mit einem Überlagerungslenkgetriebe zur Erzeugung eines Überlagerungslenkwinkels ausgestattet ist, welcher bedarfsweise dem vom Fahrer erzeugten Fahrerlenkwinkel überlagert wird. Daraus ergibt sich ein Gesamtlenkwinkel, der sich additiv aus dem Fahrerlenkwinkel und dem Überlagerungslenkwinkel zusammensetzt. Über einen Aktuator, beispielsweise einen elektrischen Stellmotor, wird der Überlagerungslenkwinkel über das Überlagerungslenkgetriebe in das Lenksystem eingespeist, insbesondere in eine Lenkwelle, über die der Fahrerlenkwinkel in Richtung der lenkbaren Räder übertragen wird. Die Lenkwelle ist zu diesem Zweck zweigeteilt, wobei das Überlagerungslenkgetriebe zwischen zwei Abschnitten der Lenkwelle angeordnet ist. Der Aktuator des Überlagerungslenksystems wird über Stellsignale angesteuert, wobei situationsabhängig ein Überlagerungslenkwinkel erzeugt wird, über den der Gesamtlenkwinkel vergrößert oder verkleinert werden kann. Gegebenenfalls ist der Überlagerungslenkwinkel gleich null, so dass der Gesamtlenkwinkel dem vom Fahrer erzeugten Fahrerlenkwinkel entspricht.

Bei dem erfindungsgemäßen Verfahren wird zunächst festgestellt, ob das Fahrzeug die Fahrbahn bzw. Sollspur teilweise oder vollständig verlassen hat. Ist dies der Fall, kann eine Gefahrensituation vorliegen, die potenziell den Fahrer zu einer Überreaktion im Sinne eines Zurückreißens des Lenkrades zum Erreichen der Sollspur verleiten kann. Um einer derartigen Überreaktion entgegenzuwirken und dadurch die Gefahrensituation zu entschärfen, ist vorgesehen, dass in dem Überlagerungslenksystem ein Überlagerungslenkwinkel erzeugt wird, welcher der Lenkbewegung des Fahrers entgegengesetzt ist, so dass der Gesamtlenkwinkel reduziert wird. Dies bedeutet eine Vergrößerung der Lenkübersetzung, also ein indirekteres Lenkverhalten, bei dem Lenkwinkeländerungen des Fahrers in kleinere Radlenkwinkeländerungen der lenkbaren Räder des Fahrzeugs umgesetzt werden. Eine mögliche Überreaktion des Fahrers wird dadurch stark abgemildert, so dass der Lenkwunsch des Fahrers zwar grundsätzlich umgesetzt wird, jedoch in einer die Fahrzeugsicherheit nicht oder zumindest weniger beeinträchtigenden Weise. Das indirektere Lenkverhalten beim Zurücklenken in die Soll-Fahrspur geht mit geringeren Quer- bzw. Seitenführungskräften einher, so dass in einem größeren Betriebsbereich die Fahrstabilität gewährleistet ist. Grundsätzlich möglich ist auch zusätzlich zum Einstellen eines indirekteren Lenkverhaltens die Modifikation eines Lenkunterstützungsmomentes, welches über eine Servoeinheit, insbesondere einen elektrischen Servomotor in das Lenksystem eingespeist wird. Für den Fall, dass das Fahrzeug die Sollspur zumindest teilweise verlässt, wird das in Richtung der rückstellenden Lenkbewegung wirkende Lenkunterstützungsmoment über die Servoeinheit zumindest reduziert, gegebenenfalls bis auf null reduziert, oder sogar der Lenkbewegung entgegengesetzt. Auf diese Weise wird ein Verhärten der Lenkung erreicht, so dass der Fahrer beim Zurücklenken in die Fahrspur ein erhöhtes Lenkmoment über das Lenkrad aufbringen muss. Der Fahrer erhält hierdurch einen Hinweis, die Lenkbewegung zu reduzieren, also den Lenkeinschlag, die Lenkwinkelgeschwindigkeit und/oder die Lenkbeschleunigung zurückzunehmen.

Das Verfahren wird nur durchgeführt, wenn das Fahrzeug bereits teilweise oder vollständig die Sollspur verlassen hat. Dies wird, gemäß einer bevorzugten Ausführung, mittels einer fahrzeugeigenen Sensorik festgestellt, bei der es sich beispielhaft um die Sensorik eines ESP-Systems (Elektronisches Stabilitätsprogramm) handelt. Die Sensorik umfasst beispielsweise Raddrehzahlsensoren, einen Querbeschleunigungssensor, einen Gierratensensor und einen Fahrerlenkwinkelsensor. Auf der Grundlage der von der Sensorik gelieferten Sensordaten kann festgestellt werden, ob die Sollspur vom Fahrzeug so weit verlassen worden ist, dass der erfindungsgemäße Eingriff zur Beeinflussung des Rücklenkverhaltens durch den Fahrer durchgeführt werden soll.

Möglich ist es auch, das Verlassen der Fahrbahn unter Berücksichtigung der Daten eines Spurhalte-Fahrerassistenzsystems festzustellen. Derartige Fahrerassistenzsysteme sind zum Teil bereits in Fahrzeugen eingebaut, so dass auf die Datenbasis des Spurhalte-Fahrerassistenzsystems zurückgegriffen werden kann. Zweckmäßigerweise werden die Daten des Spurhalte-Fahrerassistenzsystems ergänzend zu den Informationen herangezogen, welche die fahrzeugeigene Sensorik, insbesondere die ESP-Sensorik liefert.

Zusätzlich oder alternativ kann das Verlassen der Fahrspur auch über ein im Fahrzeug eingebautes Navigationssystem festgestellt werden. Gegebenenfalls werden die Daten des Navigationssystems ergänzend bzw. zur Stützung der Auswertung der Daten aus der fahrzeugeigenen Sensorik bzw. des Spurhalte-Fahrerassistenzsystems herangezogen.

Gemäß einer weiteren zweckmäßigen Ausführung ist vorgesehen, dass die Änderung des Lenkübersetzungsverhältnisses durch Modifikation des Überlagerungslenkwinkels nur für den Fall durchgeführt wird, dass auf der Grundlage der Sensordaten bzw. des Navigationssystems festgestellt wird, dass der Fahrer auf die Fahrbahn zurücklenken möchte. Dies wird insbesondere aus den Lenkwinkeldaten festgestellt, wobei gegebenenfalls auch Ableitungen der Lenkwinkeldaten berücksichtigt werden können, also die Lenkwinkelgeschwindigkeit bzw. die Lenkwinkelbeschleunigung. Alternativ hierzu ist es aber auch möglich, immer den Überlagerungslenkwinkel zu modifizieren und ein indirekteres Lenkverhalten einzustellen, sobald das Fahrzeug die Fahrbahn zumindest teilweise verlassen hat.

Auch wenn festgestellt wird, dass der Fahrer nicht in Richtung der Soll-Fahrspur zurücklenkt, kann gegebenenfalls ein Eingriff in das Überlagerungslenkgetriebe und/oder das Lenkunterstützungsmoment durchgeführt werden. Beispielsweise kann die Lenkung durch Aufbringen eines entgegengesetzten Unterstützungsmomentes stark verhärten, um den Fahrer davon abzuhalten, sich noch weiter von der Soll-Fahrspur zu entfernen. Möglich ist es auch, eine Lenkbewegung des Fahrers, über die das Fahrzeug sich von der Sollspur entfernen würde, ganz oder teilweise durch einen Eingriff in das Überlagerungslenkgetriebe zu kompensieren.

Gemäß einer weiteren zweckmäßigen Ausführung ist vorgesehen, dass die Höhe des Eingriffs in das Überlagerungslenksystem von aktuellen Zustands- bzw. Betriebsgrößen des Fahrzeugs und/oder von Umgebungsinformationen abhängt. Beispielsweise kann die Höhe des Eingriffes über den Überlagerungslenkwinkel und gegebenenfalls das Unterstützungsmoment in Abhängigkeit von der Lenkwinkelgeschwindigkeit und/oder der Lenkwinkelbeschleunigung gewählt werden, welche vom Fahrer bei der Gegenlenkbewegung durchgeführt wird im Bestreben, wieder in die Sollspur zurückzugelangen. Bei hoher Lenkwinkelgeschwindigkeit bzw. -beschleunigung wird zum Beispiel ein größerer, der Lenkbewegung entgegengesetzter Überlagerungslenkwinkel erzeugt als bei kleineren Lenkwinkelgeschwindigkeiten bzw. -beschleunigungen.

Das Verfahren läuft in einem Regel- bzw. Steuergerät ab, welches Bestandteil des Lenksystems sein kann.

Weitere Vorteile und zweckmäßige Ausführungen sind den weiteren Ansprüchen, der Figurenbeschreibung und den Zeichnungen zu entnehmen. Es zeigen:
- Fig. 1: eine Darstellung eines aktiven Lenksystems mit einem Überlagerungslenkgetriebe zum Erzeugen eines Überlagerungslenkwinkels,
- Fig. 2: ein Ablaufdiagramm mit Verfahrensschritten zur Modifikation des Überlagerungslenkwinkels im Falle des Verlassens der Soll-Fahrspur.

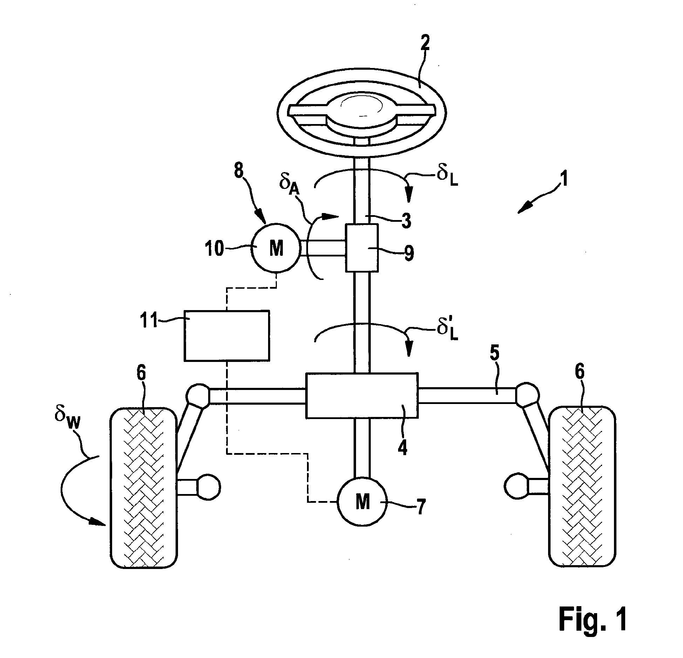

In Fig. 1 ist ein aktives Lenksystem 1 für ein Fahrzeug dargestellt. Das Lenksystem 1 umfasst ein Lenkrad 2, eine Lenkwelle 3, ein Lenkgetriebe 4, ein Lenkgestänge 5, einen elektrischen Servomotor 7 sowie ein Überlagerungslenksystem 8 mit einem Überlagerungslenkgetriebe 9 und einem elektrischen Stellmotor 10. Der Fahrer gibt über das Lenkrad 2 einen Fahrerlenkwinkel δ_{L} vor, mit dem die Lenkwelle 3 beaufschlagt wird. In die zweigeteilte Lenkwelle 3 ist das Überlagerungslenkgetriebe 9 des Überlagerungslenksystems 8 integriert, über das der Lenkbewegung des Fahrers ein Überlagerungslenkwinkel δ_{A} überlagert werden kann. Das Überlagerungslenkgetriebe 9 wird von dem elektrischen Stellmotor 10 angesteuert. Der Überlagerungslenkwinkel δ_{A} addiert sich zum Fahrerlenkwinkel δ_{L} zum Gesamtlenkwinkel δ_{L}', der dem Lenkgetriebe 4 zugeführt wird, woraufhin über das Lenkgestänge 5 in den lenkbaren Rädern 6 ein Radlenkwinkel δ_{W} eingestellt wird. Über den elektrischen Servomotor 7 kann ein Lenkunterstützungsmoment in das Lenksystem eingespeist werden.

Der elektrische Servomotor 7 und der elektrische Stellmotor 10 des Überlagerungslenksystems 8 werden über Stellsignale eines Regel- bzw. Steuergerätes 11 in Abhängigkeit von aktuellen Zustands- bzw. Betriebsgrößen des Fahrzeugs bzw. in Abhängigkeit von Umgebungsinformationen eingestellt. Die Zustands- bzw. Betriebsgrößen des Fahrzeugs und die Umgebungsinformationen können aus einer fahrzeugeigenen Sensorik bzw. einem Navigationssystem gewonnen werden. Es werden beispielsweise die Sensorinformationen eines ESP-Systems im Fahrzeug mit Raddrehzahlsensoren, einem Querbeschleunigungssensor, einem Gierratensensor und einem Fahrerlenkwinkelsensor verwendet. Darüber hinaus ist es auch möglich, Informationen eines im Fahrzeug eingesetzten Spurhalte-Fahrerassistenzsystems zu verarbeiten.

Der Überlagerungslenkwinkel δ_{A} im Überlagerungslenksystem 8 kann entweder zu einer Verstärkung oder zu einer Abschwächung des Fahrerlenkwinkels δ_{L} führen. Im Falle einer Verstärkung wird das Lenkübersetzungsverhältnis im Sinne eines direkteren Lenkverhaltens verkleinert, im Falle einer Abschwächung wird das Lenkübersetzungsverhältnis vergrößert, was mit einem indirekteren Lenkverhalten einhergeht. Bei einer Verstärkung ist der Überlagerungslenkwinkel gleichgerichtet wie der Fahrerlenkwinkel, bei einer Abschwächung entgegengesetzt gerichtet.

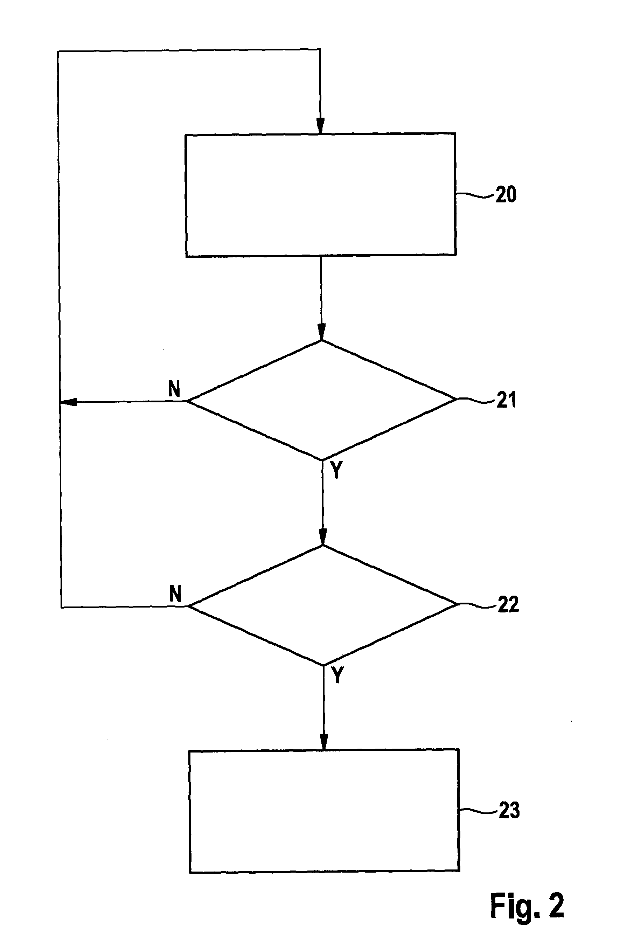

In Fig. 2 ist ein Ablaufdiagramm mit Verfahrensschritten dargestellt, welche im Falle des Verlassens der Soll-Fahrspur durchgeführt werden, um einer eventuellen Überreaktion des Fahrers mit einem Zurückreißen des Lenkrades entgegenzuwirken.

Zunächst werden in einem ersten Verfahrensschritt 20 die Sensordaten, welche aus der fahrzeugeigenen Sensorik gewonnen werden, insbesondere aus einem ESP-System, ausgewertet. Zusätzlich können Daten eines im Fahrzeug enthaltenen Navigationssystems und gegebenenfalls sonstiger Fahrerassistenzsysteme wie zum Beispiel einem Spurhalte-Fahrerassistenzsystem ausgewertet werden. Aus den vorliegenden Informationen kann die aktuelle Position des Fahrzeuges auf der Fahrbahn ermittelt bzw. ein teilweises oder vollständiges Verlassen der Fahrbahn bzw. der Sollspur festgestellt werden.

Im nächsten Verfahrensschritt 21 erfolgt eine Abfrage, ob das Fahrzeug die Sollspur ganz oder zumindest teilweise verlassen hat. Ein zumindest teilweises Verlassen der Sollspur liegt vor, wenn die Abweichung der Ist-Position von der Sollspur ein definiertes Maß überschreitet. Ist dies nicht der Fall, wird der Nein-Verzweigung ("N") folgend wieder zum ersten Verfahrensschritt 20 zurückgekehrt und in zyklischen Abständen das gesamte Verfahren erneut durchlaufen. Ergibt dagegen die Abfrage im Verfahrensschritt 21, dass das Fahrzeug die Sollspur zumindest teilweise verlassen hat, wird der Ja-Verzweigung ("Y") folgend zum nächsten Verfahrensschritt 22 fortgefahren.

Im Verfahrensschritt 22 erfolgt die Abfrage, ob der Fahrer durch Betätigen des Lenkrades in der Weise in das Lenksystem eingreift, dass das Fahrzeug wieder sich in Richtung der Sollspur zurückbewegen soll. Dieser Fahrerwunsch kann durch Auswerten von Lenkwinkelinformationen bzw. Ableitungen hiervon erkannt werden. Wird beispielsweise der aktuelle Lenkwinkel vom Fahrer so verändert, dass das Fahrzeug sich wieder in Richtung der Sollspur zurückbewegt, kann davon ausgegangen werden, dass ein entsprechender Fahrerwunsch vorliegt. In diesem Fall wird der Ja-Verzweigung folgend zum nächsten Verfahrensschritt 23 vorangeschritten, andernfalls der Nein-Verzweigung folgend wieder zum Beginn des Verfahrens gemäß Verfahrensschritt 20 zurückgekehrt.

Im Verfahrensschritt 23 wird in das Überlagerungslenksystem so eingegriffen, dass das Lenkverhalten indirekter eingestellt wird. Dies erfolgt dadurch, dass der Überlagerungslenkwinkel δ_{A} dem Fahrerlenkwinkel δ_{L} entgegengesetzt gerichtet wird, so dass ein kleinerer Radlenkwinkel eingestellt wird als dies ohne Eingriff über das Überlagerungslenksystem der Fall wäre. Auf diese Weise können Überreaktionen des Fahrers, insbesondere ein Zurückreißen des Lenkrades so weit abgeschwächt werden, dass einerseits dem Fahrerwunsch zur Rückkehr in die Sollspur genügt und andererseits ein Überreißen des Lenkrades mit einer Bewegung des Fahrzeugs über die Sollspur hinaus vermieden und die Fahrstabilität beibehalten wird.

## Patentansprüche

1. Verfahren zur Modifikation eines Überlagerungslenkwinkels (δ_{A}) im Lenksystem (1) eines Fahrzeugs, wobei der Überlagerungslenkwinkel (δ_{A}) in einem Überlagerungslenkgetriebe (9) dem vom Fahrer erzeugten Fahrer-Lenkwinkel (δ_{L}) überlagerbar ist, wobei für den Fall, dass das Fahrzeug zumindest teilweise die Fahrbahn verlässt, der Überlagerungslenkwinkel (δ_{A}) zur Einstellung einer größeren Lenkübersetzung verändert wird.

2. Verfahren nach Anspruch 1, **dadurch gekennzeichnet, dass** für den Fall, dass das Fahrzeug zumindest teilweise die Fahrbahn verlässt, das in Richtung der Lenkbewegung wirkende Lenkunterstützungsmoment reduziert oder der Lenkbewegung entgegengesetzt wird.

3. Verfahren nach Anspruch 1 oder 2, **dadurch gekennzeichnet, dass** das Verlassen der Fahrbahn unter Berücksichtigung der Sensordaten einer fahrzeugeigenen Sensorik festgestellt wird.

4. Verfahren nach Anspruch 3, **dadurch gekennzeichnet, dass** Sensordaten eines Raddrehzahlsensors, eines Querbeschleunigungssensors, eines Gierratensensors und eines Fahrerlenkwinkelsensors ausgewertet werden.

5. Verfahren nach einem der Ansprüche 1 bis 4, **dadurch gekennzeichnet, dass** das Verlassen der Fahrbahn unter Berücksichtigung der Daten eines Spurhalte-Fahrerassistenzsystems festgestellt wird.

6. Verfahren nach einem der Ansprüche 1 bis 5, **dadurch gekennzeichnet, dass** das Verlassen der Fahrbahn unter Berücksichtigung der Daten eines Navigationssystems festgestellt wird.

7. Verfahren nach einem der Ansprüche 1 bis 6, **dadurch gekennzeichnet, dass** die Modifikation des Überlagerungslenkwinkels (δ_{A}) bzw. des Lenkunterstützungsmoments nur für den Fall durchgeführt wird, dass festgestellt wird, dass der Fahrer auf die Fahrbahn zurücklenken möchte.

8. Verfahren nach Anspruch 7, **dadurch gekennzeichnet, dass** der Wunsch des Fahrers, auf die Fahrbahn zurückzulenken, aus Lenkwinkeldaten bzw. Ableitungen der Lenkwinkeldaten ermittelt wird.

9. Verfahren nach einem der Ansprüche 1 bis 8, **dadurch gekennzeichnet, dass** die Modifikation des Überlagerungslenkwinkels (δ_{A}) bzw. des Lenkunterstützungsmoments als Funktion einer Zustands- bzw. Betriebsgröße des Fahrzeugs bzw. des Lenksystems (1) erfolgt.

10. Verfahren nach Anspruch 9, **dadurch gekennzeichnet, dass** der Überlagerungslenkwinkel bzw. des Lenkunterstützungsmoment entgegengesetzt zum Fahrerlenkwinkel gerichtet wird,

11. Regel- bzw. Steuergerät zur Durchführung des Verfahrens nach einem der Ansprüche 1 bis 8.

12. Lenksystem in einem Fahrzeug mit einem Regel- bzw. Steuergerät (11) nach Anspruch 9.

## Claims

1. Method for modifying a superimposition steering angle (δ_{A}) in the steering system (1) of a vehicle, wherein the superimposition steering angle (δ_{A}) can be superimposed, in a superimposition steering gear mechanism (9), wherein in the event of the vehicle at least partially leaving the carriageway, the superimposition steering angle (δ_{A}) is changed in order to set a larger steering transmission ratio.

2. Method according to Claim 1, **characterized in that** in the event of the vehicle at least partially leaving the carriageway, the steering assistance torque which acts in the direction of the steering movement is reduced or opposed to the steering movement.

3. Method according to Claim 1 or 2, **characterized in that** the leaving of the carriageway is detected taking into account the sensor data of a sensor system mounted in the vehicle.

4. Method according to Claim 3, **characterized in that** sensor data of a wheel rotational speed sensor, of a lateral acceleration sensor, of a yaw rate sensor or of a driver steering angle sensor is evaluated.

5. Method according to one of Claims 1 to 4, **characterized in that** the leaving of the carriageway is detected taking into account the data of a lane-keeping driver assistance system.

6. Method according to one of Claims 1 to 5, **characterized in that** the leaving of the carriageway is detected taking into account the data of a navigation system.

7. Method according to one of Claims 1 to 6, **characterized in that** the modification of the superimposition steering angle (δ_{A}) or of the steering assistance torque is carried out only in the event of it being detected that the driver would like to steer back onto the carriageway.

8. Method according to Claim 7, **characterized in that** the desire by the driver to steer back onto the carriageway is determined from steering angle data and/or derivatives of the steering angle data.

9. Method according to one of Claims 1 to 8, **characterized in that** the superimposition steering angle (δ_{A}) or the steering assistance torque is modified as a function of a state variable or operating variable of the vehicle or of the steering system (1).

10. Method according to Claim 9, **characterized in that** the superimposition steering angle or the steering assistance torque is directed opposite to the driver steering angle.

11. Closed-loop or open-loop control device for carrying out the method according to one of Claims 1 to 8.

12. Steering system in a vehicle having a closed-loop or open-loop control device (11) according to Claim 9.

## Revendications

1. Procédé de modification d'un angle (δ_{A}) de superposition de braquage dans un système de braquage (1) d'un véhicule,
l'angle (δ_{A}) de superposition de braquage pouvant être superposé à l'angle de braquage (δ_{L}) imposé par le conducteur dans une transmission (9) de braquage de superposition,
l'angle (δ_{A}) de superposition de braquage étant modifié en vue d'établir un plus grand rapport de transmission de braquage au cas où le véhicule quitte au moins en partie la bande de roulement.

2. Procédé selon la revendication 1, **caractérisé en ce qu'**au cas où le véhicule quitte au moins en partie la bande de roulement, le couple de soutien au braquage agissant dans le sens du déplacement de braquage est réduit ou est opposé au déplacement de braquage.

3. Procédé selon les revendications 1 ou 2, **caractérisé en ce que** la sortie hors de la bande de roulement est constatée en tenant compte de données de capteurs d'un ensemble de capteurs propre au véhicule.

4. Procédé selon la revendication 3, **caractérisé en ce que** les données d'un capteur de vitesse de rotation des roues, d'un capteur d'accélération transversale, d'un capteur de vitesse de lacet et d'un capteur d'angle de braquage imposé par le conducteur sont évaluées.

5. Procédé selon l'une des revendications 1 à 4, **caractérisé en ce que** la sortie hors de la bande de roulement est constatée en tenant compte des données d'un système d'assistance au conducteur pour le maintien sur la bande de roulement.

6. Procédé selon l'une des revendications 1 à 5, **caractérisé en ce que** la sortie hors de la bande de roulement est constatée en tenant compte des données d'un système de navigation.

7. Procédé selon l'une des revendications 1 à 6, **caractérisé en ce que** la modification de l'angle (δ_{A}) de superposition de braquage ou du couple d'assistance au braquage n'est exécutée qu'au cas où il est constaté que le conducteur souhaite revenir sur la bande de roulement.

8. Procédé selon la revendication 7, **caractérisé en ce que** le souhait du conducteur de revenir sur la bande de roulement est déterminé à partir de données d'angle de braquage ou de dérivées des données de l'angle de braquage.

9. Procédé selon l'une des revendications 1 à 8, **caractérisé en ce que** la modification de l'angle (δ_{A}) de superposition de braquage ou du couple d'assistance au braquage s'effectue en fonction d'une grandeur d'état ou de fonctionnement du véhicule ou du système de braquage (1).

10. Procédé selon la revendication 9, **caractérisé en ce que** l'angle de superposition de braquage ou le couple de soutien au braquage sont orientés dans le sens opposé à l'angle de braquage imposé par le conducteur.

11. Appareil de régulation ou de commande destiné à exécuter le procédé selon l'une des revendications 1 à 8.

12. Système de braquage d'un véhicule doté d'un appareil de régulation ou de commande (11) selon la revendication 9.
